# FASCICULE DE BREVET EUROPEEN

(11) **EP 2 443 528 B1**
(45) Date de publication et mention de la délivrance du brevet: **16.01.2019**
(21) Numéro de dépôt: 10728829.2
(22) Date de dépôt: 27.05.2010
(51) Int. Cl.: G05B 19/401

(54) **DISPOSITIF DE RECALAGE/NETTOYAGE DE MACHINE D'USINAGE**
EINRICHTUNG ZUM RÜCKSETZEN/REINIGEN EINER BEARBEITUNGSMASCHINE
DEVICE FOR RESETTING/CLEANING A MACHINING MACHINE

(30) Priorité: 18.06.2009 FR 0954131
(43) Date de publication de la demande: 25.04.2012
(73) Titulaire: PSA Automobiles SA, 78300 Poissy (FR)
(72) Inventeur: VIDAL, Olivier, F-42170 Saint Just Saint Rambert (FR)
(74) Mandataire: Bourguignon, Eric Pascal Jean
(86) Numéro de dépôt international: PCT/FR2010/051021
(87) Numéro de publication internationale: WO 2010/146266

(56) Documents cités:
- EP-A2- 1 197 819
- FR-A1- 2 899 503
- US-A- 3 971 114
- US-A- 5 152 641

## Description

La présente invention revendique la priorité de la demande française 0954131 déposée le 18 Juin 2009.

L'invention se rapporte au domaine des dispositifs pour le recalage de position d'un outil porté par une machine d'usinage vis-à-vis d'une pièce à usiner par l'intermédiaire de cet outil, et le nettoyage de la machine d'usinage. Une application particulière de l'invention vise le domaine des machines d'usinage à commande numérique, et notamment celui des installations de lignes d'usinage à chargement automatique regroupant plusieurs machines d'usinage pour usiner des pièces en grande série, par exemple destinées à l'industrie automobile.

De telles machines d'usinage génèrent une importante quantité de copeaux lors des opérations d'usinage. Les copeaux s'accumulent au niveau de zones de rétention dans les machines d'usinage. Les différentes positions des zones de rétention dépendent de nombreux paramètres. Les paramètres sont notamment la forme physique des copeaux liée à la matière usinée et au type d'usinage (par exemple perçage, fraisage, ou taraudage), la forme des montages permettant le chargement, le bridage ou la prise des pièces à usiner. L'accumulation de copeaux entraîne des problèmes de qualité d'usinage et de fiabilité des machines d'usinage, de sorte que des opérations de nettoyage manuelles doivent être planifiées. Ces opérations de nettoyage engendrent une diminution du temps de production, un coût supérieur de main d'oeuvre des conducteurs d'installation, et un risque de blessure des conducteurs d'installation en raison de la nature des copeaux et de la difficulté d'accès aux zones de rétention dans la machine d'usinage.

Le document WO2007/116182 décrit un dispositif pour le recalage en butée des origines absolues d'une machine d'usinage, notamment à commande numérique, munie d'un porte outil propre à se déplacer selon les directions respectivement perpendiculaires des trois axes X, Y et Z de l'espace en regard d'une pièce à usiner montée sur un porte pièce fixe par rapport à l'outil mobile. Le dispositif comporte un palpeur apte à se substituer à l'outil d'usinage de la machine pour un déplacement selon l'axe Z du porte outil, ce palpeur étant adapté à venir en contact avec un effort limité contre une butée de recalage fixée sur le porte pièce et comportant une face plane s'étendant perpendiculairement à la direction de l'axe Z et deux autres faces dont les plans sont inclinés sur cet axe, les normales à ces plans inclinés délimitant respectivement avec la direction de l'axe Z deux surfaces planes perpendiculaires l'une à l'autre pour matérialiser les directions des axes X et Y le document US 5 162 641 A décrit aussi un tel dispositif.

Le document JP30116899 décrit un palpeur destiné à améliorer l'efficacité d'un procédé d'usinage et à réduire les erreurs de mesure pour améliorer la précision d'usinage en nettoyant les saletés accrochées au niveau de la pointe d'un stylet et d'une boule du palpeur. Le palpeur est pourvu d'un mécanisme de nettoyage par jet de liquide de nettoyage ou d'air et d'un boîtier muni d'une brosse, tous deux étant dirigés en direction de la pointe du stylet.

Cependant, une telle solution technique n'est pas satisfaisante car le mécanisme de nettoyage monté extérieurement au palpeur est encombrant et ne permet que le nettoyage de la pointe du stylet du palpeur. Il existe un besoin d'amélioration de l'efficacité du nettoyage de l'ensemble des points de rétention des machines d'usinage, c'est-à-dire d'une manière rapide et sure.

Un but de l'invention est de proposer un dispositif de recalage et de nettoyage remédiant à au moins un des inconvénients de l'art antérieur, en particulier réduisant la durée nécessaire au nettoyage des zones de rétention des machines d'usinage.

Selon un premier aspect, l'invention concerne un dispositif de recalage de la position d'un outil d'usinage porté par un porte outil d'une machine d'usinage vis-à-vis d'une pièce à usiner par l'intermédiaire de cet outil et de nettoyage de la machine d'usinage, le dispositif comprenant un palpeur comportant un corps de révolution pouvant être fixé sur le porte outil, ledit palpeur étant substitué momentanément à l'outil d'usinage ou fixé à demeure sur le porte outil de la machine d'usinage et mis en oeuvre de manière indépendante de l'outil d'usinage et le corps de révolution comportant au moins un conduit interne débouchant sur au moins un orifice d'éjection d'un fluide de nettoyage, lesdits conduit interne et orifice d'éjection étant agencés pour diffuser le fluide de nettoyage en direction d'au moins un élément constitutif de la machine d'usinage et ledit conduit interne débouchant sur au moins un orifice d'éjection de fluide de nettoyage radial.

Le conduit interne peut déboucher sur au moins un orifice d'éjection de fluide de nettoyage axial.

L'orifice d'éjection de fluide de nettoyage peut être muni d'une buse.

Le conduit interne du palpeur peut être couplé à un circuit hydraulique de la machine d'usinage délivrant un fluide de nettoyage sous pression.

Le fluide de nettoyage peut être du liquide de coupe ou de l'air.

Un porte pièce supportant la pièce à usiner peut comporter une butée de recalage d'au moins une direction de déplacement du porte outil vis-à-vis de la pièce à usiner.

Selon un autre aspect, l'invention concerne un procédé de recalage de position d'un outil d'usinage porté par un porte outil d'une machine d'usinage vis-à-vis d'une pièce à usiner par l'intermédiaire de cet outil et de nettoyage de la machine d'usinage, le procédé comportant les étapes de couplage d'un palpeur comportant un corps de révolution sur le porte outil, ledit palpeur étant substitué momentanément à l'outil d'usinage ou fixé à demeure sur le porte outil de la machine d'usinage et mis en oeuvre de manière indépendante de l'outil d'usinage et le corps de révolution comportant au moins un conduit interne couplé à un circuit hydraulique et débouchant sur au moins un orifice d'éjection d'un fluide de nettoyage, d'injection d'un fluide de nettoyage sous pression dans le conduit interne, et de déplacement du palpeur relativement à au moins un élément constitutif de la machine d'usinage selon une trajectoire définie de sorte que le fluide de nettoyage soit diffusé en direction de l'élément constitutif de la machine d'usinage par au moins un orifice d'éjection de fluide de nettoyage radial.

Lors de l'étape de déplacement, le palpeur peut en outre réaliser au moins un contact ponctuel avec une butée de recalage d'un porte pièce de sorte à recaler au moins une direction de déplacement du porte outil vis-à-vis de la pièce à usiner.

L'invention permet un nettoyage automatisé des zones de rétention dans la machine d'usinage. L'invention peut également permettre un recalage et un nettoyage simultané de la machine d'usinage. Il en résulte une durée de nettoyage plus courte que lors de la réalisation manuelle d'opération de nettoyage par les conducteurs d'installation.

Egalement, grâce à l'invention, il n'est plus nécessaire que les conducteurs d'installation accèdent aux zones de rétention dans la machine d'usinage pour en éliminer au moins partiellement les copeaux accumulés. L'invention permet en conséquence de réduire, voire de supprimer le risque de blessure des conducteurs d'installation.

D'autres avantages apparaîtront dans la description qui va suivre.

La présente invention est illustrée par des exemples non limitatifs sur les Figures jointes, dans lesquelles des références identiques indiquent des éléments similaires:
- La Figure 1 représente schématiquement une machine d'usinage au cours d'une opération d'usinage;
- La Figure 2 représente schématiquement une machine d'usinage au cours d'une opération de recalage et de nettoyage;
- Les Figures 3 et 4 sont des vues en perspectives représentants un palpeur pour une machine d'usinage selon différents modes de réalisation de l'invention; et
- La Figure 5 illustre le procédé de recalage et de nettoyage selon l'invention.

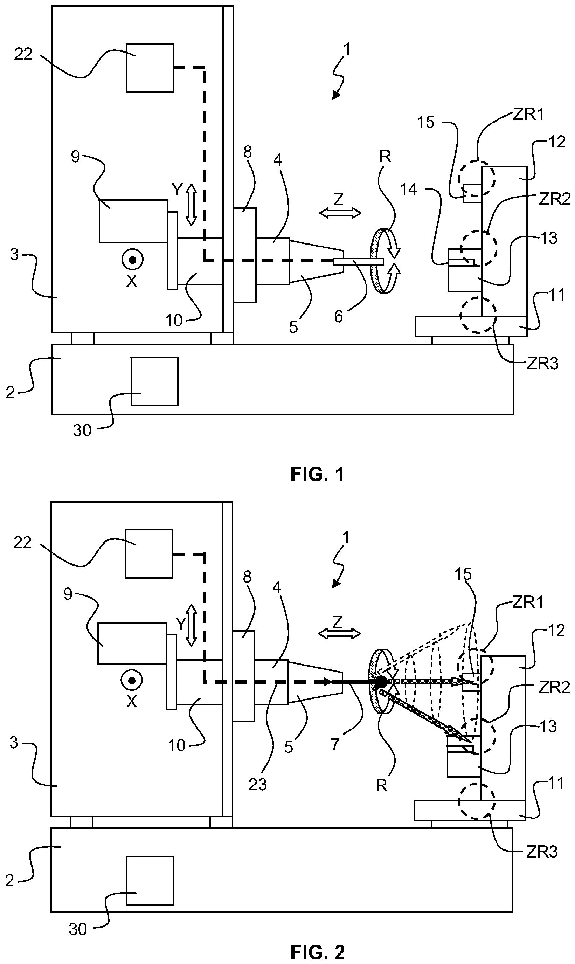

La Figure 1 représente schématiquement une machine d'usinage 1 au cours d'une opération d'usinage. La Figure 2 représente schématiquement une machine d'usinage 1 au cours d'une opération de recalage et de nettoyage.

Les différents éléments essentiels composant la machine d'usinage 1 sont représentés d'une manière schématique et sont bien connus dans le domaine des machines d'usinage, de sorte qu'ils ne seront décrits que succinctement dans la suite. La machine d'usinage 1 comporte un bâti 2 sur lequel est disposé un ensemble 3 supportant un porte outil 4 et un support 11 pour un porte pièce 12.

L'ensemble 3 comporte un mécanisme de déplacement en Z 8, un mécanisme de déplacement en X 9 et un mécanisme de déplacement en Y 10. Le mécanisme de déplacement en Z 8 permet d'imprimer au porte outil 4, un mouvement de déplacement selon la direction d'un premier axe Z. Le mécanisme de déplacement en X 9 permet d'imprimer au porte outil 4, un mouvement de déplacement selon la direction d'un deuxième axe X. Le mécanisme de déplacement en Y 10 permet d'imprimer au porte outil 4, un mouvement de déplacement selon la direction d'un troisième axe Y. Les axes X, Y et Z sont perpendiculaires entre eux.

Le porte outil 4 comporte un mandrin de fixation 5 pour un outil d'usinage 6 ou un palpeur 7. Le mandrin de fixation 5 comporte un mécanisme classique à barillet ou analogue. Il peut tourner sur lui-même de manière à permettre le montage de l'outil d'usinage 6 lors des opérations d'usinage ou d'un palpeur 7 susceptible de se substituer momentanément en position à l'outil d'usinage 6 lors des opérations de recalage et nettoyage. A titre d'exemple, l'outil d'usinage 6 peut être une broche de perçage ou de fraisage.

Le porte pièce 12 reçoit la pièce à usiner 13 de sorte que celle-ci est immobilisée en regard de l'outil d'usinage 6. Le porte pièce 12 peut également être mobile. Lors d'une opération d'usinage telle qu'illustrée à la Figure 1, l'outil d'usinage 6 est par exemple une broche prévue pour réaliser dans la pièce à usiner 13 un perçage borgne 14, consécutivement au positionnement de la broche devant la pièce à usiner par déplacement du porte outil 4 selon les directions des axes X et Y, et au déplacement de la broche en rotation R selon la direction de l'axe Z. Lorsque le porte pièce 12 est également mobile, l'opération d'usinage peut être réalisé par un déplacement du porte pièce 12 relativement au porte outil 4.

Une telle opération d'usinage génère des copeaux résultant de l'usinage de la matière composant la pièce à usiner 13. Ces copeaux ont tendance à s'accumuler dans diverses zones de rétention, à titre d'exemple ZR1, ZR2, ZR3 comme illustrées sur les Figures 1 et 2.

Par suite des variations climatiques dans l'environnement de la machine d'usinage 1, il est nécessaire de procéder à intervalles de temps appropriés à des opérations de recalage en butée des origines de la machine d'usinage. Le recalage consiste au recalage de la cote absolue définissant la position relative de l'outil d'usinage 6 vis-à-vis de la pièce à usiner 13 selon les trois axes X, Y et Z. L'opération de recalage permet d'assurer que les cotes d'usinage de la pièce à usiner respectent les tolérances imposées propres à la production en grande série, et ceci quelques soient les décalages pouvant résulter desdites variations climatiques au cours du fonctionnement de la machine d'usinage.

Lors d'une opération de recalage telle qu'illustrée à la Figure 2, le palpeur 7 est substitué momentanément à l'outil d'usinage 6. Pour assurer le recalage, le porte pièce 12 comporte une butée 15 en regard du palpeur 7. La butée 15 possède une structure particulière permettant de recaler les axes. Par exemple, la butée comporte trois faces (non représentées), chaque face ayant un angle particulier permettant de recaler chaque axe correspondant. D'une manière connue, chaque contact du palpeur avec la structure de la butée referme une boucle de mesure (non représentée) permettant de déterminer les amplitudes des décalages dans le positionnement. La machine d'usinage à commande numérique tient compte des amplitudes pour corriger la position de l'outil d'usinage relativement à la pièce à usiner.

Avantageusement, selon l'invention le palpeur va être utilisé pour réaliser un nettoyage des diverses zones de rétention ZR1, ZR2, ZR3. Avantageusement, l'opération de nettoyage peut être réalisée concomitamment à l'opération de recalage. Alternativement, les opérations de nettoyage peuvent être réalisées selon un cycle spécifique distinct du cycle des opérations de recalage.

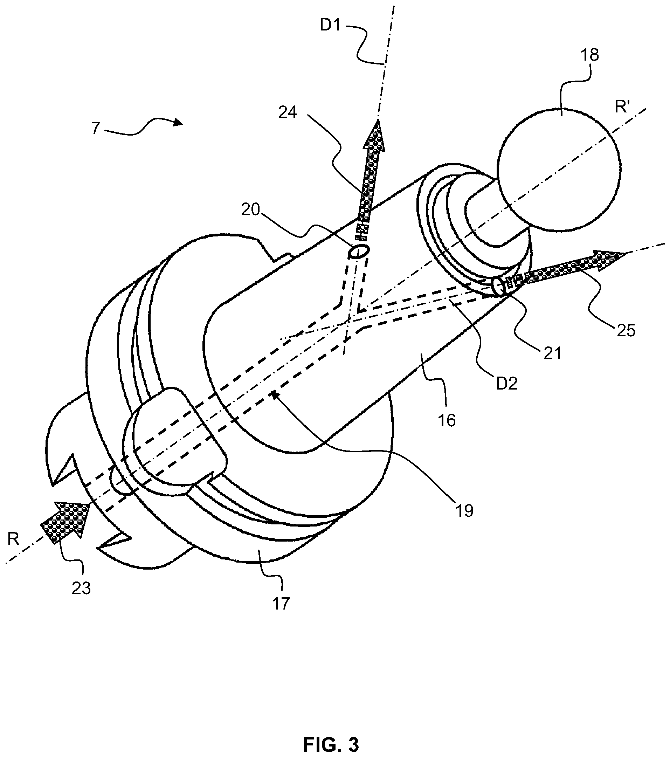

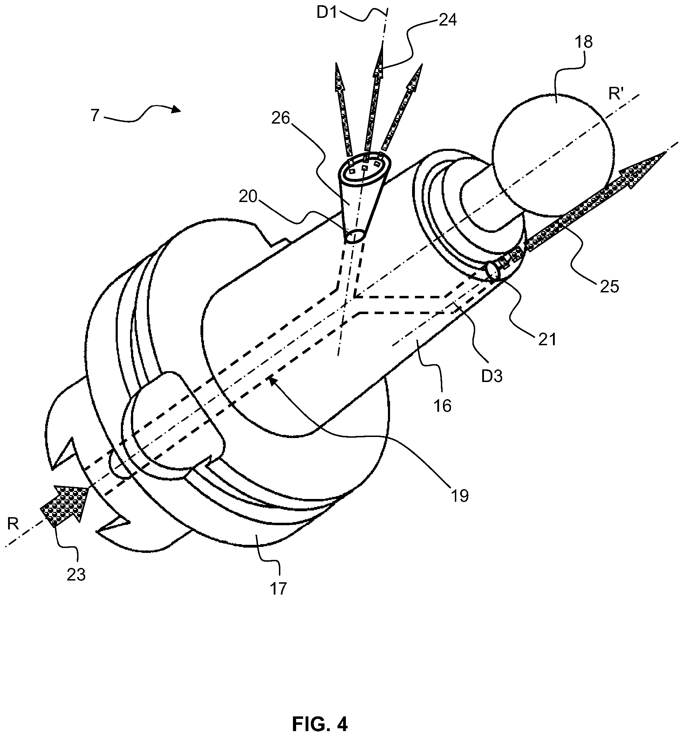

Le palpeur 7 illustré sur les Figures 3 et 4 comporte un corps de révolution 16 muni à une première extrémité d'un ensemble de connexion 17 et à une seconde extrémité d'une sphère 18. L'ensemble de connexion 17 permet le montage et l'immobilisation du palpeur 7 sur le porte outil 4. L'ensemble de connexion 17 comporte des moyens de fixation dont le détail est sans incidence sur les caractéristiques du dispositif de l'invention. La sphère 18 est destinée à venir en contact avec la butée 15.

Le corps de révolution 16 comporte au moins un conduit interne 19. Le conduit interne 19 débouche au niveau de la première extrémité de sorte qu'il puisse être couplé à un circuit hydraulique 22 de la machine d'usinage (visible sur les Figures 1 et 2) lorsque le palpeur 7 est monté et immobilisé sur le porte outil 4. Par exemple, le circuit hydraulique 22 peut délivrer un fluide de nettoyage 23 sous la forme de liquide de coupe ou d'air sous pression. Le conduit interne 19 débouche sensiblement au niveau de la seconde extrémité par au moins un orifice d'éjection 20, 21 de fluide de nettoyage. Le conduit interne 19 peut se diviser en une pluralité de conduits débouchant sur les différents orifices d'éjection. La direction du fluide de nettoyage est déterminée par la direction du conduit interne et la position de l'orifice d'éjection. Par exemple, le conduit interne 19 peut déboucher sur un orifice d'éjection de fluide de nettoyage radial 20 imprimant une direction sensiblement radiale D1 au jet de fluide de nettoyage 24 relativement à l'axe du corps de révolution RR'. Il peut également déboucher sur un orifice d'éjection de fluide de nettoyage axial 21 imprimant une direction sensiblement axiale D2 au jet de fluide de nettoyage 25 relativement à l'axe du corps de révolution RR'. Le conduit interne et l'orifice d'éjection permettent ainsi la diffusion du fluide de nettoyage en direction d'au moins un élément constitutif de la machine d'usinage lorsque le palpeur 7 est monté et immobilisé sur le porte outil 4 et lorsque le circuit hydraulique 22 délivre un fluide de nettoyage 23 sous pression. De ce fait, les copeaux accumulés au niveau des diverses zones de rétention ZR1, ZR2, ZR3 peuvent être nettoyés lors du mouvement du palpeur, par exemple lors d'une opération de recalage.

La Figure 4 représente un mode de réalisation du palpeur 7 qui diffère du mode de réalisation de la Figure 3 en ce qu'au moins un orifice d'éjection de fluide de nettoyage, par exemple l'orifice d'éjection de fluide de nettoyage radial 20 est muni d'une buse 26. Le jet d'eau sous-pression ainsi créé a une forme dépendant de la forme de la buse 26, par exemple une forme conique présentant un angle d'ouverture déterminé. La Figure 4 illustre également la modification de la direction du jet de fluide de nettoyage 25 en modifiant la direction du conduit interne 19 débouchant sur l'orifice d'éjection axial 21. Le conduit interne comporte une portion parallèle à l'axe du corps de révolution RR' de façon à imprimer une direction axiale D3 au jet de fluide de nettoyage 25 parallèle à l'axe du corps de révolution RR'.

Les Figures 3 et 4 montrent à titre d'exemple des palpeurs comportant deux orifices d'éjection 20, 21. Néanmoins, des conduits supplémentaires débouchant sur des orifices d'éjection supplémentaires peuvent être prévus dans le corps de révolution.

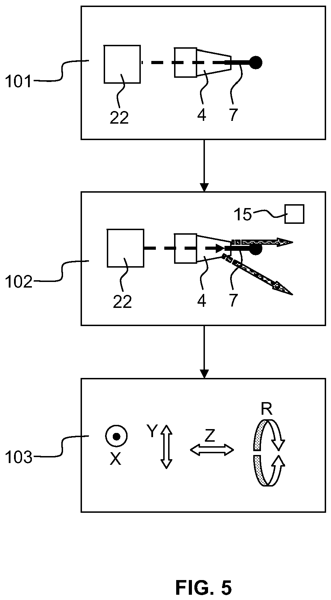

La Figure 5 illustre le procédé de recalage et de nettoyage. Avantageusement, le cycle de recalage et de nettoyage intervient à une fréquence déterminée pendant la production de pièces usinées en grande série. La fréquence peut être déterminée de manière empirique en fonction du type de pièces à usiner, de la matière constituantes des pièces à usiner, de la quantité de copeaux produite en fonction du temps de production, de la durée moyenne entre deux recalages, etc... Le procédé comporte une étape de couplage 101 du palpeur, une étape d'injection 102 de fluide de nettoyage dans le palpeur, puis une étape de déplacement 103 du palpeur selon une trajectoire déterminée. Lors de l'étape de couplage 101, le palpeur 7 est fixé sur le porte outil 4 et couplé au circuit hydraulique 22. Lors de l'étape d'injection 102, un fluide de nettoyage est injecté sous pression dans le conduit interne du palpeur 7. Puis, lors de l'étape de déplacement 103, le palpeur 7 est déplacé relativement aux éléments constitutifs de la machine d'usinage selon les directions X, Y et Z définissant une trajectoire particulière. Egalement, le porte outil peut être mis en rotation R pour créer un rideau de fluide de nettoyage assurant le balayage d'un volume plus important. De préférence, la trajectoire est déterminée de sorte que le fluide de nettoyage soit diffusé en direction de toute la zone d'usinage et/ou plus particulièrement en direction des diverses zones de rétention ZR1, ZR2, ZR3 (visibles sur les Figures 1 et 2) afin d'éliminer les copeaux accumulés au niveau de ces zones. De cette manière les éléments constitutifs de la machine d'usinage sont nettoyés. La trajectoire peut être déterminée de manière empirique en fonction des zones de rétention constatées au fur et à mesure de l'utilisation de la machine d'usinage.

Selon une première alternative, les étapes de nettoyage et de recalage sont distinctes, chacune procédant d'un cycle spécifique.

Selon une seconde alternative, lors de l'étape de déplacement 103, le palpeur peut également réaliser des contacts ponctuels avec la butée 15 du porte pièce 12. De cette manière un recalage selon une ou plusieurs directions de déplacement X, Y et Z du porte outil vis-à-vis de la pièce à usiner peut être réalisé simultanément au nettoyage.

Avantageusement, la machine d'usinage à commande numérique comporte un automate programmable 30 (visible sur les Figures 1 et 2) lequel est programmé pour exécuter automatiquement un cycle de recalage en butée, un cycle de nettoyage, ou un cycle combiné de recalage et nettoyage selon une fréquence définie et une trajectoire définie.

L'utilisation d'un palpeur pour la réalisation conjointe des cycles de recalage et de nettoyage permet d'une part l'utilisation d'un outil unique évitant ainsi un changement d'outil, d'autre part l'utilisation d'un programme commun de recalage en butée et de nettoyage, et enfin l'automatisation de l'opération de nettoyage. Ainsi, le palpeur et le procédé selon l'invention permettent la suppression de la durée de nettoyage des machines d'usinage du temps de production, autorisant un gain en rendement opérationnel des machines d'usinage. A titre d'exemple, sur une ligne d'usinage comportant 36 machines d'usinage, et une durée de nettoyage de 5 minutes par machine, une durée totale de 180 minutes peut être économisée au profit de la production. De plus, les conducteurs de ligne d'usinage ne sont plus astreints aux nettoyages manuels des machines d'usinage, ce qui améliore le gain de productivité et diminue, voire supprime le risque de blessure lié à l'opération de nettoyage.

Bien que la machine d'usinage décrite en relation avec les Figures propose un seul porte outil portant tantôt un outil d'usinage, tantôt un palpeur, l'invention s'applique également à une machine d'usinage comportant un palpeur de recalage et de nettoyage fixé à demeure sur le porte outil de la machine d'usinage. Dans ce cas le changement ou la permutation de l'outil d'usinage et du palpeur ne serait pas nécessaire puisque le palpeur serait mis en oeuvre de manière indépendante de l'outil d'usinage.

A noter également que la sortie du trou peut être équipée d'une buse spécifique permettant une forme de jet adapté à un problème particulier.

## Revendications

1. Dispositif de recalage de position d'un outil d'usinage (6) porté par un porte outil (4, 5) d'une machine d'usinage (1) vis-à-vis d'une pièce à usiner (13) par l'intermédiaire de cet outil (6) et de nettoyage de la machine d'usinage (1), le dispositif comprenant un palpeur (7) comportant un corps de révolution (16) pouvant être fixé sur le porte outil (4, 5), ledit palpeur (7) étant substitué momentanément à l'outil d'usinage (6) ou fixé à demeure sur le porte outil (4,5) de la machine d'usinage (1) et mis en oeuvre de manière indépendante de l'outil d'usinage (6), le corps de révolution (16) comporte au moins un conduit interne (19) débouchant sur au moins un orifice d'éjection (20, 21) d'un fluide de nettoyage (24, 25), lesdits conduit interne (19) et orifice d'éjection (20, 21) étant agencés pour diffuser le fluide de nettoyage (24, 25) en direction d'au moins un élément constitutif de la machine d'usinage (1), ledit conduit interne (19) débouchant sur au moins un orifice d'éjection de fluide de nettoyage radial (20).

2. Dispositif de recalage et de nettoyage selon la revendication 1, dans lequel le conduit interne (19) débouche sur au moins un orifice d'éjection de fluide de nettoyage axial (21).

3. Dispositif de recalage et de nettoyage selon l'une des revendications précédentes, dans lequel l'orifice d'éjection (20, 21) de fluide de nettoyage est muni d'une buse (26).

4. Dispositif de recalage et de nettoyage selon l'une des revendications précédentes, dans lequel le conduit interne (19) du palpeur (7) est couplé à un circuit hydraulique (22) de la machine d'usinage (1) délivrant un fluide de nettoyage (23) sous pression.

5. Dispositif de recalage et de nettoyage selon la revendication précédente, dans lequel le fluide de nettoyage (23) est du liquide de coupe ou de l'air.

6. Dispositif de recalage et de nettoyage selon l'une des revendications précédentes, dans lequel un porte pièce (12) supportant la pièce à usiner (13) comporte une butée de recalage (15) d'au moins une direction de déplacement du porte outil (X, Y, Z) vis-à-vis de la pièce à usiner (13).

7. Dispositif de recalage et de nettoyage selon l'une des revendications, **caractérisé en ce que** le corps de révolution (16) est muni à une extrémité d'un ensemble de connexion (17) et à une seconde extrémité d'une sphère (18), le conduit interne (19) débouchant sensiblement au niveau de la seconde extrémité par au moins un orifice d'éjection (20,21).

8. Procédé de recalage de position d'un outil d'usinage (6) porté par un porte outil (4, 5) d'une machine d'usinage (1) vis-à-vis d'une pièce à usiner (13) par l'intermédiaire de cet outil (6) et de nettoyage de la machine d'usinage (1), le procédé comporte les étapes de:
- couplage (101) d'un palpeur (7) comportant un corps de révolution (16) sur le porte outil (4, 5), le corps de révolution (16) comportant au moins un conduit interne (19) couplé à un circuit hydraulique (22) et débouchant sur au moins un orifice d'éjection de fluide de nettoyage radial (20) d'un fluide de nettoyage, ledit palpeur (7) étant substitué momentanément à l'outil d'usinage (6) ou fixé à demeure sur le porte outil (4,5) de la machine d'usinage (1) et mis en oeuvre de manière indépendante de l'outil d'usinage (6),
- injection (102) d'un fluide de nettoyage (23) sous pression dans le conduit interne (19), et
- déplacement (103) du palpeur (7) relativement à au moins un élément constitutif de la machine d'usinage (1) selon une trajectoire définie de sorte que le fluide de nettoyage soit diffusé (24, 25) en direction de l'élément constitutif de la machine d'usinage (1) par au moins un orifice d'éjection de fluide de nettoyage radial (20).

9. Procédé de recalage et de nettoyage selon la revendication précédente, dans lequel lors de l'étape de déplacement (103), le palpeur (7) réalise en outre au moins un contact ponctuel avec une butée de recalage (15) d'un porte pièce (12) de sorte à recaler au moins une direction de déplacement (X, Y, Z) du porte outil (4, 5) vis-à-vis de la pièce à usiner (13).

## Patentansprüche

1. Einrichtung zum Positionsrücksetzen eines Bearbeitungswerkzeugs (6), das von einem Werkzeugträger (4, 5) einer Bearbeitungsmaschine (1) getragen wird, bezüglich eines Werkstücks (13), das anhand dieses Werkzeugs (6) zu bearbeiten ist, und zum Reinigen der Bearbeitungsmaschine (1), wobei die Vorrichtung einen Fühler (7) umfasst, der einen Rotationskörper (16) umfasst, der auf dem Werkzeugträger (4, 5) befestigt werden kann, wobei der Fühler (7) vorübergehend das Bearbeitungswerkzeug (6) ersetzt oder dauerhaft auf dem Werkzeugträger (4, 5) der Bearbeitungsmaschine (1) befestigt ist, und unabhängig von dem Bearbeitungswerkzeug (6) umgesetzt wird, wobei der Rotationskörper (16) mindestens eine interne Leitung (19) umfasst, die auf mindestens einer Auswurföffnung (20, 21) eines Reinigungsfluids (24, 25) mündet, wobei die interne Leitung (19) und die Auswurföffnung (20, 21) eingerichtet sind, um das Reinigungsfluid (24, 25) in Richtung mindestens eines Bestandteils der Bearbeitungsmaschine (1) zu verteilen, wobei die interne Leitung (19) auf mindestens einer radialen Reinigungsfluid-Auswurföffnung (20) mündet.

2. Einrichtung zum Rücksetzen und Reinigen nach Anspruch 1, wobei die interne Leitung (19) auf mindestens einer axialen Reinigungsfluid-Auswurföffnung (21) mündet.

3. Einrichtung zum Rücksetzen und Reinigen nach einem der vorstehenden Ansprüche, wobei die Reinigungsfluid-Auswurföffnung (20, 21) mit einer Düse (26) versehen ist.

4. Einrichtung zum Rücksetzen und Reinigen nach einem der vorstehenden Ansprüche, wobei die interne Leitung (19) des Fühlers (7) mit einem Hydraulikkreislauf (22) der Bearbeitungsmaschine (1), der ein Reinigungsfluid (23) unter Druck liefert, gekoppelt ist.

5. Einrichtung zum Rücksetzen und Reinigen nach dem vorstehenden Anspruch, wobei das Reinigungsfluid (23) Schneidflüssigkeit oder Luft ist.

6. Vorrichtung zum Rücksetzen und Reinigen nach einem der vorstehenden Ansprüche, wobei ein Werkstückträger (12), der das zu bearbeitende Werkstück (13) trägt, einen Rücksetzanschlag (15) mindestens einer Bewegungsrichtung des Werkzeugträgers (X, Y, Z) bezüglich des zu bearbeitenden Werkstücks (13) umfasst.

7. Vorrichtung zum Rücksetzen und Reinigen nach einem der Ansprüche, **dadurch gekennzeichnet, dass** der Rotationskörper (16) an einem Ende einer Verbindungsbaugruppe (17) und an einem zweiten Ende mit einer Sphäre (18) versehen ist, wobei die interne Leitung (19) im Wesentlichen im Bereich des zweiten Endes durch mindestens eine Auswurföffnung (20, 21) mündet.

8. Vorrichtung zum Rücksetzen und Reinigen eines Bearbeitungswerkzeugs (6), das von einem Werkzeugträger (4, 5) einer Bearbeitungsmaschine (1) getragen wird, bezüglich eines Werkstücks (13), das anhand dieses Werkzeugs (6) zu bearbeiten ist, und zum Reinigen der Bearbeitungsmaschine (1), wobei das Verfahren folgende Schritte umfasst:
- Koppeln (101) eines Fühlers (7), der einen Rotationskörper (16) umfasst, auf dem Werkzeugträger (4, 5), wobei der Rotationskörper (16) mindestens eine interne Leitung (19) umfasst, die mit einem Hydraulikkreislauf (22) gekoppelt ist und auf mindestens einer radialen Reinigungsfluid-Auswurföffnung (20) eines Reinigungsfluids mündet, wobei der Fühler (7) vorübergehend das Bearbeitungswerkzeug (6) ersetzt oder dauerhaft auf dem Werkzeugträger (4, 5) der Bearbeitungsmaschine (1) befestigt ist und unabhängig von dem Bearbeitungswerkzeug (6) umgesetzt wird,
- Injektion (102) eines Reinigungsfluids (23) unter Druck in die interne Leitung (19), und
- Bewegen (103) des Fühlers (7) bezüglich mindestens eines Bestandteils der Bearbeitungsmaschine (1) entlang einer Bahn, die derart definiert ist, dass das Reinigungsfluid in Richtung des Bestandteils der Bearbeitungsmaschine (1) durch mindestens eine radiale Auswurföffnung (20) des Reinigungsfluids (24, 25) verteilt wird.

9. Verfahren zum Rücksetzen und Reinigen nach dem vorstehenden Anspruch, wobei bei dem Bewegungsschritt (103) der Fühler (7) außerdem mindestens einen vorübergehenden Kontakt mit einem Rücksetzanschlag (15) eines Werkstückträgers (12) derart ausführt, dass mindestens eine Bewegungsrichtung (X, Y, Z) des Werkzeugträgers (4, 5) bezüglich des zu bearbeiteten Werkstücks (13) zurückgesetzt wird.

## Claims

1. A device for resetting the position of a machining tool (6) supported by a tool holder (4, 5) of a machining machine (1) relative to a part to be machined (13) using this tool (6), and for cleaning the machining machine (1), the device including a feeler (7) comprising a revolution body (16) able to be fixed on the tool holder (4, 5), said feeler (7) being substituted momentarily for the machining tool (6) or fixed permanently on the tool holder (4, 5) of the machining machine (1) and implemented independently of the machining tool (6), the revolution body (16) comprises at least one inner channel (19) leading onto at least one opening (20, 21) for ejecting a cleaning fluid (24, 25), said inner channel (19) and ejection opening (20, 21) being arranged so as to diffuse the cleaning fluid (24, 25) in the direction of at least one element constituting the machining machine (1), said inner channel (19) leading onto at least one radial ejection opening of cleaning fluid (20).

2. The resetting and cleaning device according to Claim 1, in which the inner channel (19) leads onto at least one axial ejection opening of cleaning fluid (21).

3. The resetting and cleaning device according to one of the preceding claims, in which the opening (20, 21) for ejecting cleaning fluid is provided with a nozzle (26) .

4. The resetting and cleaning device according to one of the preceding claims, in which the inner channel (19) of the feeler (7) is coupled to a hydraulic circuit (22) of the machining machine (1) delivering a cleaning fluid (23) under pressure.

5. The resetting and cleaning device according to the preceding claim, in which the cleaning fluid (23) is cutting fluid or air.

6. The resetting and cleaning device according to one of the preceding claims, in which a part holder (12) supporting the part which is to be machined (13) comprises a resetting stop (15) of at least one direction of movement of the tool holder (X, Y, Z) relative to the part to be machined (13).

7. The resetting and cleaning device according to one of the claims, **characterized in that** the revolution body (16) is provided at one end with a connection assembly (17) and at a second end with a sphere (18), the inner channel (19) leading on substantially at the level of the second end through at least one ejection opening (20, 21).

8. A method for resetting the position of a machining tool (6) supported by a tool holder (4, 5) of a machining machine (1) in relation to a part to be machined (13) using this tool (6), and for cleaning the machining machine (1), the method comprises the steps of:
- coupling (101) a feeler (7) comprising a revolution body (16) on the tool holder (4, 5), the revolution body (16) comprising at least one inner channel (19) coupled to a hydraulic circuit (22) and leading on to at least one radial cleaning fluid ejection opening (20) of a cleaning fluid, said feeler (7) being substituted momentarily for the machining tool (6) or permanently fixed on the tool holder (4, 5) of the machining machine (1) and implemented independently of the machining tool (6),
- injection (102) of a cleaning fluid (23) under pressure in the inner channel (19), and
- movement (103) of the feeler (7) relative to at least one element constituting the machining machine (1) along a defined trajectory such that the cleaning fluid is diffused (24, 25) towards the element constituting the machining machine (1) through at least one radial ejection opening (20) of cleaning fluid.

9. The resetting and cleaning method according to the preceding claim, in which during the movement step (103), the feeler (7) realizes in addition at least one point contact with a resetting stop (15) of a part holder (12) so as to reset at least one direction of movement (X, Y, Z) of the tool holder (4, 5) relative to the part to be machined (13).
